# FASCICULE DE BREVET EUROPEEN

(11) **EP 2 073 566 B1**
(45) Date de publication et mention de la délivrance du brevet: **16.11.2016**
(21) Numéro de dépôt: 08170414.0
(22) Date de dépôt: 02.12.2008
(51) Int. Cl.: H04Q 11/00, H04J 14/02, H04L 12/701

(54) **Procédé pour établir une connexion de récupération dans un réseau optique**
Verfahren zur Herstellung einer Verbindung zur Rückgewinnung in einem optischen Netz
Method for establishing a recovery connection in an optical network

(30) Priorité: 20.12.2007 FR 0760073
(43) Date de publication de la demande: 24.06.2009
(73) Titulaire: ALCATEL LUCENT, 92100 Boulogne-Billancourt (FR)
(72) Inventeur: Peloso, Pierre, 78140, VELIZY (FR); Ronot, Benoit, 78140, PARIS (FR)
(74) Mandataire: Berthier, Karine

(56) Documents cités:
- US-A1- 2003 117 950
- US-A1- 2007 189 663
- SHUYAN FAN ED - ANONYMOUS: "A Backup LSP Bandwidth Reallocation Mechanism in MPLS Networks", COMMUNICATIONS, CIRCUITS AND SYSTEMS PROCEEDINGS, 2006 INTERNATIONAL C ONFERENCE ON, IEEE, PI, 1 juin 2006 (2006-06-01), pages 1735-1739, XP031010756, ISBN: 978-0-7803-9584-8

## Description

L'invention se rapporte au domaine des réseaux optiques, en particulier au domaine des réseaux optiques transparents qui sont capables de commuter des signaux dans le domaine photonique pour établir des connexions photoniques entre des éléments de réseau distants.

Dans les réseaux optiques, une caractéristique critique est la capacité du réseau à se reconfigurer en cas de défaillance ou de perturbation d'un élément de réseau, par exemple noeud ou lien, afin d'éviter ou de limiter une discontinuité du service. Cette caractéristique est recherchée au moyen de différents matériels et procédés désignés généralement sous le nom de récupération, protection ou restauration.

Le document US2007189663 décrit un procédé pour établir une connexion de récupération dans un réseau optique avec une phase de confirmation de fonctionnement des ressources de récupération.

Dans les réseaux optiques à plan de contrôle distribué de type GMPLS (Generalized Multi-Protocol Label Switching), les données sont transportées au moyen de connexions appelées Label-Swiched Paths (LSP). Les RFC 4427 et 4428 de l'IETF proposent et analysent différents mécanismes de récupération pour un réseau à plan de contrôle GMPLS. Un LSP de récupération peut être prévu pour protéger un LSP de travail de bout en bout ou un segment du LSP de travail. Dans ce contexte, plusieurs mécanismes de récupération sont distingués en fonction du niveau de planification du LSP de récupération avant toute détection de faute. A une extrémité du spectre des solutions proposées, le mécanisme de type protection 1 + 1 implique de transporter une deuxième copie du trafic sur un LSP de récupération complètement déterminé dans le plan de contrôle et complètement établi dans le plan de données, ce qui assure un temps de récupération minimal à compter de la détection d'une faute. Ce mécanisme totalement redondant consomme beaucoup de ressources de transport. A l'autre extrémité du spectre, les mécanismes de re-routage ou de restauration peuvent impliquer un temps de récupération étendu après la détection de faute, selon le niveau des informations non planifiées et l'ampleur des tâches correspondantes restant à accomplir, par exemple calcul de route, réservation de ressources, contrôle d'admission, sélection de ressources, établissement du LSP dans le plan de contrôle, établissement du LSP dans le plan de données (établissement des interconnexions dans les noeuds). Dans ces cas, le bénéfice résultant du plus faible niveau de planification du LSP de récupération tient à la plus grande flexibilité d'utilisation des ressources.

Un but de l'invention est de fournir un mécanisme de récupération des données pour un réseau optique qui offre un compromis satisfaisant entre la consommation des ressources et le temps de récupération des données.

Pour cela, l'invention fournit un procédé pour établir une connexion de récupération dans un réseau optique, comprenant les étapes consistant à :
allouer des ressources de transport optique à ladite connexion de récupération le long d'un chemin de connexion,
pendant une phase de test de ladite connexion de récupération, transmettre un signal optique au moyen desdites ressources de transport optique le long du chemin de connexion et régler un dispositif de modification de puissance du signal optique, mémoriser un état de réglage dudit dispositif de modification de puissance obtenu pendant ladite phase de test de la connexion de récupération,
interrompre la transmission dudit signal optique à la fin de la phase de test, dans une phase d'activation de la connexion de récupération, réinitialiser le réglage du dispositif de modification de puissance du signal optique dans l'état de réglage mémorisé et recommencer à transmettre un signal optique au moyen desdites ressources de transport optique le long du chemin de connexion.

La phase de test et la phase d'activation peuvent être déclenchées ou contrôlées par différentes méthodes. Selon un mode de réalisation particulier, le procédé peut aussi comporter une étape consistant à notifier à au moins un noeud de commutation situé sur ledit chemin de connexion au moins un événement appartenant au groupe consistant en le début de la phase de test, la fin de la phase de test et le début de la phase d'activation au moyen de messages de gestion transmis par un appareil de gestion de réseau centralisé.

Selon un autre mode de réalisation particulier, le procédé peut aussi comporter une étape consistant à notifier à au moins un noeud de commutation situé sur ledit chemin de connexion au moins un événement appartenant au groupe consistant en le début de la phase de test, la fin de la phase de test et le début de la phase d'activation au moyen de messages de signalisation échangés par les noeuds de commutation situés sur le chemin de connexion.

Avantageusement, le procédé peut aussi comporter une phase de latence de la connexion de récupération entre la phase de test et la phase d'activation, pendant laquelle les ressources de transport optique allouées à ladite connexion de récupération sont associées à un état d'allocation partagé qui autorise l'utilisation desdites ressources par d'autres connexions. Ainsi, la possibilité d'utiliser des ressources allouées à la connexion de récupération tant que la connexion n'est pas activée, notamment pour transporter du trafic supplémentaire non prioritaire, permet d'accroître le taux d'utilisation du réseau.

De préférence, l'étape consistant à régler le dispositif de modification de puissance du signal optique est effectuée en fonction d'un profil de puissance souhaité prédéterminé et d'un signal de rétroaction sensible à la puissance du signal optique effectivement transmis en aval du dispositif de modification de puissance.

Le procédé peut être appliqué à tout type de réseau optique, avec ou sans conversion du trafic dans le domaine électrique au niveau des noeuds, avec ou sans multiplexage. Selon un mode réalisation préféré, le signal optique est transporté en multiplexage par division de longueur d'onde (WDM), ledit profil de puissance souhaité prédéterminé comportant une relation entre les puissances respectives de différents canaux de longueur d'onde multiplexés. Selon un mode réalisation préféré, la connexion de récupération est établie dans le domaine photonique.

Le procédé peut être appliqué à de nombreux types de dispositifs de modification de puissance du signal optique, notamment les atténuateurs optiques variables, les amplificateurs optiques à bande étroite ou large (par exemple SOA, EDFA ou autres), les commutateurs à sélection de longueur d'onde, les bloqueurs de longueur d'onde et les égaliseurs de spectre.

De préférence, on prépare de cette manière les réglages de tous les dispositifs de modification de puissance du signal optique situés sur le chemin de la connexion, ou du moins les réglages des principaux dispositifs susceptibles de consommer un temps de stabilisation significatif.

L'invention fournit également un élément de réseau optique comportant : des ressources de transport optique allouées à une connexion de récupération pour pouvoir transporter un signal optique de ladite connexion de récupération, un dispositif de modification de puissance pour modifier la puissance dudit signal optique, et
des moyens de commande aptes à régler ledit dispositif de modification de puissance du signal optique, à mémoriser dans un dispositif de stockage de données un état de réglage dudit dispositif de modification de puissance obtenu pendant une phase de test de ladite connexion de récupération, et à réinitialiser le réglage du dispositif de modification de puissance dans l'état de réglage mémorisé dans une phase d'activation de la connexion de récupération.

Ce dispositif de stockage de données peut être par exemple une mémoire locale de l'élément de réseau ou un dispositif distant avec lequel l'élément de réseau est capable de communiquer, par exemple un appareil de gestion de réseau.

Selon des modes de réalisation avantageux, le noeud de communication peut présenter une ou plusieurs des caractéristiques suivantes :
- un module de communication pour recevoir des messages de gestion transmis par un appareil de gestion de réseau centralisé, de manière à recevoir notification d'au moins un événement appartenant au groupe consistant en le début de la phase de test, la fin de la phase de test et le début de la phase d'activation au moyen desdits messages de gestion.
- un module de signalisation pour échanger des messages de signalisation avec des éléments de réseau situés sur un chemin de ladite connexion de récupération, de manière à recevoir notification d'au moins un événement appartenant au groupe consistant en le début de la phase de test, la fin de la phase de test et le début de la phase d'activation au moyen desdits messages de signalisation.
- des moyens de commande aptes à enregistrer des états d'allocation des ressources de transport optique de l'élément de réseau, lesdits états d'allocation définissant des conditions dans lesquelles lesdites ressources peuvent être utilisées par des connexions, lesdits moyens de commande étant aptes à changer l'état d'allocation des ressources de transport optique allouées à ladite connexion de récupération au début de la phase d'activation, de manière à autoriser une utilisation desdites ressources par d'autres connexions avant la phase d'activation et à interdire une telle utilisation pendant la phase d'activation.
- un dispositif de mesure sensible à la puissance du signal optique effectivement transmis en aval du dispositif de modification de puissance et dans lequel lesdits moyens de commande sont aptes à régler le dispositif de modification de puissance du signal optique en fonction d'un profil de puissance souhaité prédéterminé et d'un signal de rétroaction produit par ledit dispositif de mesure.

L'invention part du constant que, dans un réseau optique, en particulier dans un réseau photonique ou transparent, la puissance des signaux optiques transportant le trafic doit être précisément contrôlée pour garantir une qualité de transmission satisfaisante, en particulier lorsque les distances de transmission sont grandes. Il est possible de définir a priori les profils de puissance désirés en différents points du réseau, par exemple à l'entrée d'un lien, compte tenu des caractéristiques du réseau et des phénomènes physiques connus, notamment le bruit d'émission spontanée des amplificateurs optiques et les effets non-linéaires. Pour respecter ces profils de puissance désirés, un réseau optique doit comporter des mécanismes de contrôle de puissance, notamment fondés sur des boucles de rétroaction. Néanmoins, le réglage de la puissance d'un signal par de tels mécanismes prend un temps non négligeable, ce qui peut être pénalisant lorsqu'il s'agit de récupérer une connexion affectée par une défaillance.

Une idée à la base de l'invention est de planifier une connexion de récupération, de manière qu'elle puisse être rapidement activée en cas de besoin. Pour cela, après avoir présélectionné des ressources à allouer à la connexion, la connexion est temporairement établie dans le plan de données, pour une phase de test, de manière à pré-effectuer les réglages de puissance nécessaires et à sauvegarder ces réglages. Ainsi, ces réglages peuvent être immédiatement rétablis lorsque la connexion de récupération doit être activée. Néanmoins, passée la phase de test, les ressources allouées à la connexion de récupération peuvent être affectées à d'autres utilisations, par exemple pour transporter des trafics non prioritaires.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
la figure 1 est une représentation schématique fonctionnelle d'un réseau optique dans lequel des modes de réalisation de l'invention peuvent être mis en oeuvre ;
la figure 2 est une représentation schématique fonctionnelle d'un noeud optique transparent du réseau de la figure 1 ;
la figure 3 est un diagramme représentant un procédé pour établir une connexion de récupération dans le réseau de la figure 1 selon un mode de réalisation de l'invention.

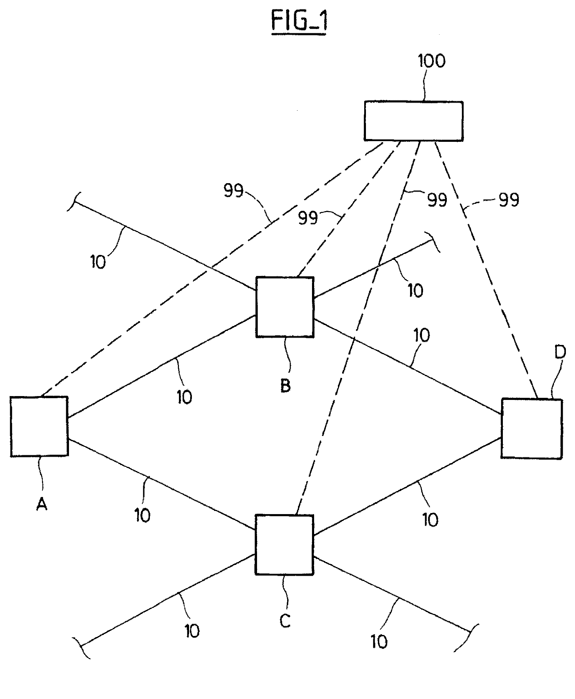

La figure 1 représente très schématiquement un réseau optique WDM comportant quatre noeud de commutation A, B, C et D reliés par des liens optiques 10. Dans certains modes de réalisation, un appareil de gestion de réseau 100 est aussi prévu, mais ce n'est pas obligatoire. Le nombre de noeuds et la topologie du réseau de la figure 1 sont choisis uniquement pour les besoins de l'illustration et n'ont aucun caractère limitatif.

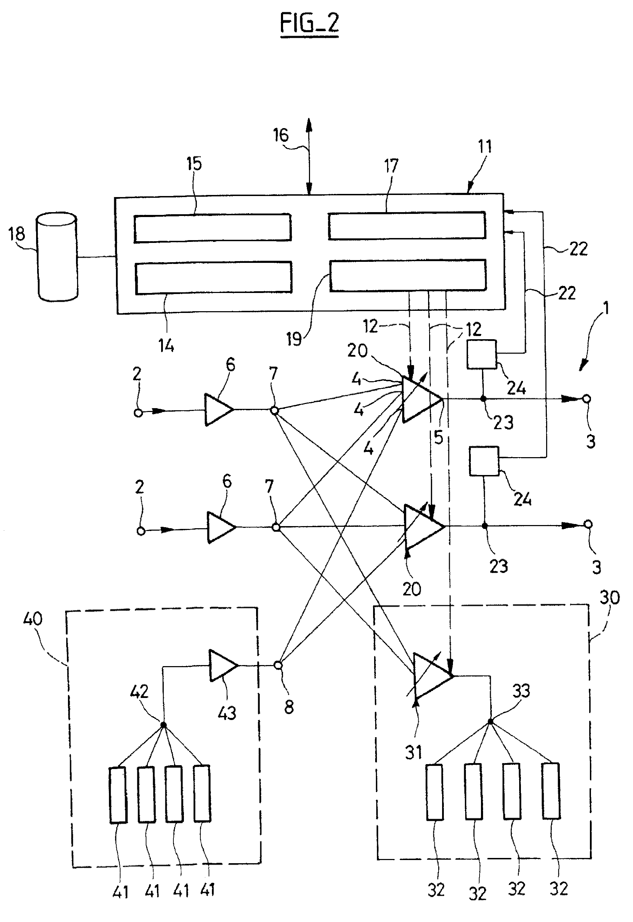

La figure 2 représente schématiquement l'architecture d'un noeud photonique 1 pouvant être utilisé pour réaliser les noeud A, B, C et D. Le noeud1 présente deux ports d'entrée 2 et deux ports de sortie 3, destinés à être reliés à des liens optiques 10. Ici, on a choisi pour l'illustration une architecture transparente de type diffusion-sélection (broadcast and select) basée sur des commutateurs à sélection de longueurs d'onde 20 (ou WSS pour wavelength selective switch). D'autres architectures et des degrés de connectivité différents sont aussi possibles.

On rappelle qu'un commutateur à sélection de longueurs d'onde désigne un équipement qui peut être utilisé comme multiplexeur reconfigurable ou comme démultiplexeur reconfigurable. Lorsqu'il agit en tant que multiplexeur, comme montré sur la figure 2, les ports sélectionnables 4 servent d'entrées et un port commun 5 sert de sortie commune. Le commutateur à sélection de longueurs d'onde est capable d'aiguiller des canaux de longueurs d'ondes reçus sur les entrées respectives, sélectivement en fonction d'un signal de commande, vers la sortie commune de cet équipement. Cet équipement réalise ainsi une fonction de multiplexage reconfigurable sur des canaux de longueurs d'ondes dont les fréquences optiques sont alignées sur une ou plusieurs grilles prédéterminées. Il permet de fournir en sortie un canal sélectionné parmi les canaux reçus sur les entrées ou un multiplex de sortie constitué d'un ensemble de canaux sélectionnés parmi les canaux reçus. Sur chaque port d'entrée, on peut envoyer un canal, plusieurs canaux ou aucun canal.

La commutation des canaux à l'intérieur du commutateur à sélection de longueurs d'onde est produite par des organes de manipulation spatiale de la lumière, par exemple des micromiroirs actionnés par des microactionneurs MEMS ou des cellules à cristaux liquides. En plus de réaliser une sélection des canaux, ces organes sont capables de régler l'atténuation du signal pour chaque canal de longueur d'onde transmis. Ainsi, les commutateurs à sélection de longueurs d'onde 20 du noeud 1 servent à la fois à sélectionner les canaux de longueurs d'ondes devant être transmis vers les ports 3 et à régler leur puissance de sortie canal par canal. Par exemple, dans un WSS basé sur des MEMS, le niveau d'atténuation peut être réglé en modifiant l'alignement du faisceau réfléchi par rapport à un alignement optimal, de manière à introduire des pertes correspondant à un défaut d'alignement ou défaut de focalisation choisi. La relation entre la position ou la tension de commande du microactionneur et le niveau d'atténuation résultant peut être étalonnée et tabulée dans une mémoire du WSS pour être exploitée en cours de fonctionnement.

De nombreuses architectures de commutateurs à sélection de longueurs d'ondes sont connues pour remplir des fonctionnalités similaires, avec un nombre de ports plus ou moins grand. La figure 2 ne saurait donc être considérée comme limitative à cet égard.

A partir des ports d'entrées 2, les signaux WDM entrants sont amplifiés par des amplificateurs 6 et diffusés par des coupleurs 7 de type 1:3 vers les deux WSS 20 et un dispositif d'extraction 30 respectivement. Les deux WSS 20 présentent aussi un port d'insertion relié à un dispositif d'insertion 40 via un coupleur 8.

Le dispositif d'extraction 30 sert à extraire du trafic au niveau du noeud1. Il comporte un commutateur à sélection de longueurs d'onde 31 pour sélectionner les canaux à extraire et régler leur puissance de sortie, et un ensemble de récepteurs optiques accordables 32 relié à la sortie du WSS 31 par un coupleur 33. D'autres architectures sont aussi possibles.

Le dispositif d'insertion 40 sert à insérer du trafic au niveau du noeud1. Il comporte un ensemble de sources optiques accordables modulées 41, un combineur 42 et un amplificateur 43. D'autres architectures sont aussi possibles.

Les commutateurs à sélection de longueurs d'onde 20 et 31 sont commandés par une unité de commande 11 du noeud via des liaisons de commande 12. L'unité de commande 11 remplit plusieurs fonctions représentées schématiquement par des modules fonctionnels sur la figure 2.

Un module d'interface de contrôle 15 reçoit et émet des messages de contrôle sur des canaux de contrôle 16, reliés par exemple à un appareil de gestion de réseau ou à d'autres noeuds du réseau. Les canaux de contrôle peuvent être transportés dans les mêmes liens que les données, par exemple sur une longueur d'onde dédiée, ou sur des liens séparés du plan de données, par exemple sur un réseau de contrôle superposé au réseau de données.

Un module de gestion des connexions 14 extrait des messages de contrôle les informations concernant les connexions déjà établies ou à établir ou à supprimer ou à modifier et tient à jour une table des connexions dans un stockage de données 18 du noeud 1. La table des connexions peut contenir diverses informations relatives aux connexions émises, reçues ou passant par le noeud 1, notamment origine, destination, caractéristiques de trafic (débit, qualité de service) et ressources de transport allouées (ports, longueurs d'onde, etc.). Le module de gestion des connexions 14 traduit ces informations en instructions de commutation pour un module de pilotage 19 qui est chargé de produire les signaux de commande des WSS sur les liaisons 12.

Un module de contrôle d'atténuation 17 exploite des signaux de rétroaction 22 représentant respectivement le spectre de puissance du signal WDM obtenu à la sortie de chacun des WSS 20. Le module de contrôle d'atténuation 17 fournit au module de pilotage 19 des instructions de contrôle d'atténuation pour ajuster la puissance de chaque canal en fonction d'un profil de puissance désiré prédéterminé et des niveaux de puissance effectivement mesurés. Pour produire les signaux de rétroaction 22, un coupleur 23 est placé à la sortie de chaque WSS 20 pour prélever une petite portion du signal de sortie et l'envoyer dans un dispositif de mesure de puissance des canaux 24. Le dispositif de mesure de puissance 24 mesure un spectre de puissance des canaux de longueurs d'onde qu'il reçoit. Le module de contrôle d'atténuation 17 compare ce spectre mesuré à un profil de puissance désiré prédéterminé, qui est par exemple stocké dans une mémoire de l'unité de commande 11. Le profil de puissance désiré peut avoir différentes formes, par exemple une forme sensiblement plate correspondant à des puissances égales pour tous les canaux, ou une forme non plate correspondant à une puissance plus élevée dans certaines partie du spectre et plus faible dans d'autres parties du spectre. Un profil non plat peut notamment être choisi pour compenser une courbe de gain non uniforme des amplificateurs optiques de type EDFA.

On va décrire maintenant un fonctionnement du réseau de la figure 1, dans un cas où les noeuds sont réalisés conformément à la figure 2, permettant d'établir une connexion de récupération. Une connexion de récupération désigne ici une connexion qui est associée à une connexion de travail et qui est planifiée pour pouvoir transporter le trafic de la connexion de travail en cas de défaillance de celle-ci. La connexion de récupération peut être prévue pour récupérer la connexion de travail de bout en bout, auquel cas les noeuds de source et de destination de la connexion de récupération sont les noeuds de source et de destination de la connexion de travail. Alternativement, la connexion de récupération peut être prévue pour récupérer un segment de la connexion de travail, auquel cas le noeud de source et/ou le noeud de destination de la connexion de récupération peut être différent du noeud de source et/ou du noeud de destination de la connexion de travail.

Une connexion de récupération n'est donc pas destinée à transporter du trafic immédiatement dès son établissement. L'établissement de la connexion de récupération consiste en fait à planifier la connexion de récupération dans les noeud correspondants, c'est-à-dire dans le plan de contrôle des noeuds, de manière à réserver des ressources de transport, sélectionner ces ressources et préparer l'activation de ces ressources. Une fois la connexion de récupération établie, tant qu'il n'y a pas de nécessité de l'activer, la connexion de récupération est maintenue dans un état latent dans lequel les ressources de transport allouées peuvent être temporairement utilisées pour transporter du trafic supplémentaire. L'activation de la connexion de récupération suppose de transmettre des instructions correspondantes aux noeuds dans une phase d'activation de la connexion. Les ressources de transport peuvent alors être préemptées pour établir la connexion de récupération dans le plan de données et transporter du trafic en remplacement de la connexion de travail.

On désigne ici par plan de contrôle du noeud l'ensemble des éléments, fonctionnalités et protocoles participant au contrôle du réseau, notamment les fonctionnalités fournies par une pile protocolaire GMPLS, par exemple le routage, la signalisation et l'ingénierie de trafic. On désigne par plan de données du noeud l'ensemble des éléments, fonctionnalités et protocoles participant au transfert et au transport des données. La distinction entre plan de contrôle et plan de données est une distinction logique qui ne correspond pas nécessairement à des éléments matériels distincts.

Le terme ressource de transport peut recouvrir différents éléments physiques du réseau selon les technologies de transport employées. Par exemple, dans le noeud photonique 1, des ressources de transport sont les longueurs d'ondes, les ports d'entrée 2, les ports de sortie 3, les sources optiques 41 et les récepteurs optiques 32.

Avec d'autres technologies de transport, les ressources peuvent aussi inclure de l'espace mémoire pour des files d'attente, du temps CPU, des intervalles temporels pour un multiplexage TDM, etc.

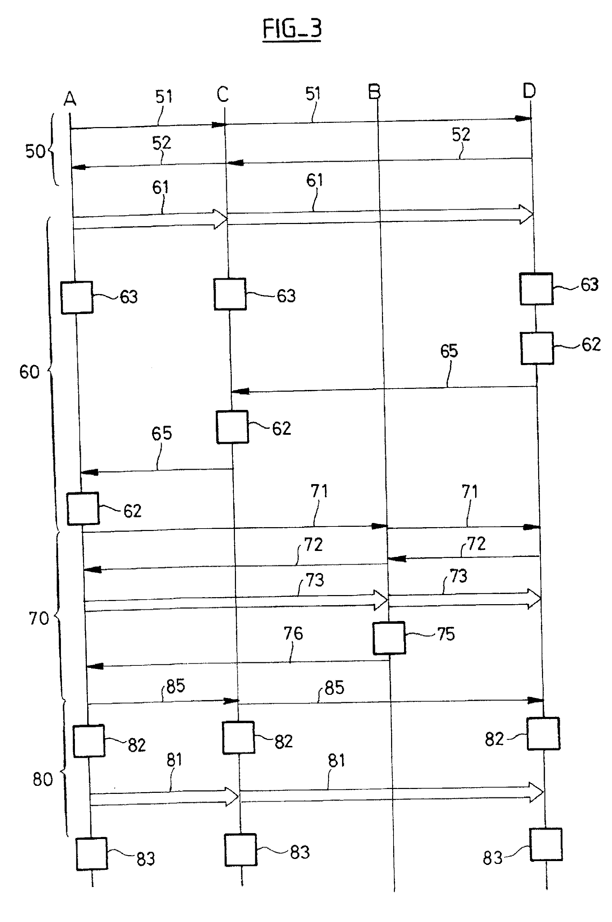

En référence à la figure 3, on suppose que la connexion de récupération consiste en un canal de longueur d'onde déterminé qui doit être émis par le noeud A, transiter de manière transparente par le noeud C et être reçu par le noeud D. La manière de déterminer la route et la longueur d'onde à utiliser n'est pas décrite ici. Toute technique connue de routage et d'allocation de longueur d'onde (routing and wavelength assignment) peut être utilisée.

Pour préparer la connexion de récupération à un niveau avancé, on décrit sur la figure 3 un procédé en quatre phases. Sur la figure 3 les flèches représentent des transmissions de signaux entre les noeuds et les carrés des étapes effectuées par les noeuds.

Dans une phase de signalisation 50, des informations concernant la connexion de récupération à établir sont transmises aux noeuds A, C et D. Dans chaque noeud, le module de gestion des connexions 14 met ainsi à jour la table des connexions pour décider et mémoriser les allocations de ressources correspondantes.

Dans une phase de test 60, les noeud réalisent les interconnexions nécessaires dans le plan de données, c'est à dire au niveau des commutateurs de longueurs d'onde 20 et 31, pour établir un chemin photonique entre une source du noeud A et un récepteur du noeud D. Le noeud A commence à transmettre un signal à la longueur d'onde choisie pour tester le chemin de connexion, comme représenté par les flèches 61. Ce signal peut être avantageusement transmis par la même source optique que celle qui est destinée à servir dans la connexion de travail, ou par une autre source. Les modules de contrôle d'atténuation 17 des noeud sont alors actifs pour régler les commutateurs de longueurs d'onde 20 et 31 à des niveaux d'atténuation conformes aux profils désirés (étape 63). Ce réglage qui implique une rétroaction peut prendre un certain temps à se stabiliser, par exemple une ou quelques secondes par noeud. Les réglages de puissance du canal de longueur d'onde de la connexion de récupération peuvent être effectués séquentiellement noeud après noeud depuis le noeud de source A jusqu'au noeud de destination D. Alternativement ces réglages peuvent être effectués dans un autre ordre. Des réglages de puissance peuvent aussi être effectués de manière simultanée en plusieurs points du chemin de connexion. Outre les atténuations produites par les commutateurs à sélection de longueur d'onde, ces réglages peuvent aussi concerner d'autres paramètres des composants du noeud, par exemple la puissance du transpondeur 41 utilisé dans le noeud source A, le gain de l'amplificateur 43, ou le gain d'un éventuel amplificateur optique intégré dans le récepteur 32 utilisé dans le noeud de destination D.

Lorsque les réglages de puissance sont stabilisés, les noeud mémorisent les réglages des WSS et autres composants ainsi obtenus en association avec un identifiant de la connexion de récupération (étape 62). Par exemple, les réglages sont mémorisés dans la table des connexions ou dans une autre structure de données logiquement associée à la table des connexions, par exemple dans le stockage de données 18 du noeud ou dans un appareil distant. De tels réglages peuvent être mémorisés sous différentes formes, par exemple sous la forme d'un niveau d'atténuation ou de gain ou sous la forme d'un niveau de signal de commande, e.g. tensions électriques appliquées au microactionneurs MEMS ou courant d'amplification appliqué à la source optique.

Puis il est mis fin à la phase de test. Le signal 61 est donc interrompu et les ressources de transport correspondantes sont placées dans un état d'allocation partagées pour une phase de latence 70, i.e. jusqu'à ce qu'on ait besoin d'utiliser la connexion de récupération. Pendant la phase de latence, les ressources restent allouées à la connexion de récupération dans le plan de contrôle, i.e. dans la table des connexions du noeud, mais cette allocation n'est pas exclusive. Le module de gestion des connexions 14 peut temporairement allouer ces ressources pour transporter d'autres signaux pendant la phase de latence 70. Selon un mode de réalisation préféré, une même ressource peut être allouée simultanément à plusieurs connexion de récupération correspondant à différentes connexions de travail disjointes, conformément à un schéma de restauration de type maillé-partagé (shared-mesh restoration).

Sur la figure 3, on a représenté un procédé d'établissement de la connexion de travail pendant la phase de latence 70. Cet ordre d'établissement autorise à utiliser pendant la phase de test des ressources devant servir ensuite à la connexion de travail, par exemple source optique du noeudA et récepteur optique du noeudD. En variante, l'établissement de la connexion de travail pourrait aussi être effectué plus tôt.

Enfin, dans une phase d'activation 80, les noeuds A, C et D rétablissent la connexion de récupération dans le plan de données pour transporter le trafic de la connexion de travail, comme représenté par les flèches 81. La phase d'activation est par exemple déclenchée en réponse à la détection d'une défaillance de la connexion de travail (étape 75), défaillance qui est ici représentée au niveau du noeud B. Si des ressources allouées à la connexion de récupération sont en train de transporter d'autres connexions, ces ressources sont préemptées au moment de la phase d'activation, de sorte que ces autres connexions doivent être interrompues ou re-routées. Cependant, ce mécanisme de préemption peut être régulé par des règles de priorité des connexions.

Lorsque les noeuds sont informés du début de la phase d'activation, à l'étape 82, les modules de pilotage 19 rétablissent les réglages d'atténuation qui ont été mémorisés à l'étape 62. Ainsi, la connexion de récupération est rendue opérationnelle de manière très rapide, sans qu'il soit nécessaire d'attendre à nouveau une stabilisation des boucles de réglage de puissance par rétroaction. Comme les réglages d'atténuation mémorisés ont été obtenus dans des conditions de transmission réelles au cours de la phase de test, il est très probable qu'ils correspondent très sensiblement aux réglages optimaux. Ainsi, la réinitialisation des WSS dans cet état mémorisé permet très rapidement de recevoir le trafic 81 au niveau du noeudde destination D avec une bonne qualité de signal.

Néanmoins, il n'est pas exclu que l'évolution du trafic au cours de la phase de latence 70, par exemple établissement de nouvelles connexions, change un peu les niveaux d'atténuations optimaux pour la connexion de récupération, par rapport aux niveaux obtenus pendant la phase de test. Pour cela, il peut être utile de réactiver les mécanismes de réglage par rétroaction dans les noeuds au cours de l'activation de la connexion, comme représenté à l'étape 83. Du fait de la réinitialisation des WSS dans des états de réglage proches de l'optimal à l'étape 82, la stabilisation des puissances à l'étape 83 peut être beaucoup plus rapide qu'en partant d'un réglage initial arbitraire.

Si la phase de latence est longue, les états de réglage mémorisés peuvent devenir plus nettement périmés. C'est pourquoi, dans un mode de réalisation, on prévoit de répéter la phase de test à des intervalles réguliers, pour mettre à jour les réglages d'atténuation mémorisés.

Par ailleurs, lorsque la cause de défaillance de la connexion de travail est ultérieurement supprimée, on peut prévoir une phase de retour à l'état normal (réversion) dans laquelle le trafic est rebasculé sur la connexion de travail et la connexion de récupération est remise dans l'état latent. Dans un mode de réalisation, au cours de cette phase, les états de réglage d'atténuation obtenus pendant la phase d'activité de la connexion de récupération sont mémorisés par les noeud, pour servir d'états initiaux lors d'une prochaine activation de la connexion de récupération. Ainsi, les états de réglage mémorisés peuvent être tenus à jour en fonction de l'évolution du trafic dans le réseau et de l'évolution correspondante des niveaux de puissance optimaux.

L'exécution du procédé décrit ci-dessus suppose de transmettre des instructions correspondantes aux noeuds impliqués. Dans un premier mode de réalisation représenté sur la figure 3, convenant par exemple pour un réseau à plan de contrôle GMPLS, ces instructions sont transmises par des messages de signalisation du protocole RSVP-TE. Dans ce cas le module d'interface de contrôle 15 des noeud comporte un module de signalisation RSVP-TE.

Dans la phase 50, le noeud source A transmet une requête d'établissement de LSP 51, i.e. un message PATH, contenant un identifiant du LSP (LSP id) et différents objets décrivant la connexion à établir, route explicite, longueur(s) d'onde disponible(s) (label set) et autres. Les conventions exposées dans les recommandations de l'IETF peuvent être utilisées, notamment la RFC 3473 et la RFC 4872. En particulier, le LSP de récupération est établi avec le bit S (Secondary) activé et le bit P (Protecting) activé. Pour déclencher la phase de test, un indicateur correspondant peut être prévu dans le message PATH. Par exemple cet indicateur peut consister en un ou plusieurs bits de l'objet ADMIN STATUS, notamment le bit T (Test) peut être mis à la valeur 1. Le message PATH est passé de noeud en noeud le long du chemin de connexion selon la technique connue. Si la connexion de récupération peut être établie, le noeud de destination D répond par un message de réservation 52, i.e. un message RESV, qui suit le chemin inverse selon la technique connue.

Pour notifier les noeuds de la fin de la phase de test, des messages RSVP-TE peuvent aussi être utilisés. Par exemple, le noeud de destination D déclenche la fin de la phase de test lorsqu'il détermine que le signal optique de la phase de test est reçu avec une qualité satisfaisante et stable. Pour terminer la phase de test, un indicateur correspondant peut être prévu dans un message RESV 65 émis par le noeud de destination D. Par exemple cet indicateur peut consister en un ou plusieurs bits de l'objet ADMIN STATUS, notamment le bit T (Test) peut être mis à la valeur 0. Ce message est transmis de noeuden noeud pour déclencher à chaque fois l'étape 62. A sa réception, le noeud source A interrompt le signal optique 61.

Conformément à la technique connue, le protocole RSVP-TE peut aussi être utilisé pour établir un LSP de travail à l'aide de messages PATH et RESV. Sur la figure 3, on a représenté schématiquement cette étape pendant la phase 70 pour un LSP de travail suivant la route A-B-C. Les flèches 71 représentent les messages PATH et les flèches 72 les messages RESV. Les flèches 73 représentent le trafic transporté sur le LSP de travail ainsi établi. La flèche 76 représente un message de notification du protocole RSVP-TE servant à avertir le noeud source A de l'existence d'une défaillance du LSP de travail, afin de déclencher l'activation du LSP de récupération. D'autres méthodes de notification des fautes sont aussi possibles.

Le protocole RSVP-TE peut aussi être utilisé pour activer le LSP de récupération en réponse à la défaillance du LSP de travail. Pour cela, conformément à la RFC 4872, le noeudA transmet par exemple un message PATH 85 contenant l'identifiant du LSP de récupération (LSP id) et avec le bit S (Secondary) désactivé.

L'utilisation du protocole RSVP-TE n'est pas le seul moyen de coordonner l'établissement de la connexion de récupération par les noeuds. D'autres protocoles de signalisation ou de gestion de réseau peuvent aussi être employés. Dans un deuxième mode de réalisation, l'établissement de la connexion de récupération est entièrement commandé par un appareil de gestion de réseau 100 relié aux noeud par des liaisons 99, comme visible sur la figure 1. Dans ce cas, le module d'interface de contrôle 15 des noeud comporte un module de communication adapté à l'appareil de gestion 100.

La description de l'unité de commande 11 donnée ci-dessus n'est pas exhaustive. L'unité de commande peut comporter bien d'autres fonctions et modules, par exemple pour piloter et configurer des transpondeurs optiques, récepteurs optiques et autres éléments actifs du noeud. Dans un mode de réalisation particulier, elle comporte toute une pile protocolaire GMPLS. En outre, bien qu'on ait représenté une seule unité de commande, il est clair que les fonctions décrites peuvent être distribuées dans plusieurs circuits, par exemple sous la forme d'un contrôleur de haut niveau pour le noeudet de plusieurs contrôleurs de bas niveau dédiés chacun à un WSS.

Les modes de réalisations décrits ci-dessus peuvent être facilement adaptés à d'autres architectures de noeuds, d'autres types de signaux, d'autres techniques de commutations, notamment dans le domaine électronique, et d'autres dispositifs de modification de puissance. Par exemple, le document EP1161115 décrit une architecture de noeudoptique dans laquelle le réglage de puissance est effectué par des atténuateurs optiques variables ou des amplificateurs.

Par ailleurs, la phase de test de la connexion de récupération peut être mise à profit pour régler d'autres caractéristiques du signal optique à l'aide de dispositifs correspondants, par exemple polarisation, dispersion et autres. Il est aussi possible de traiter ces réglages de la même manière que la puissance afin d'accélérer l'activation de la connexion de récupération.

Certains des éléments représentés, notamment les unités de commande, et les différents modules, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive.

Un appareil de gestion de réseau peut être un équipement matériel, par exemple un micro-ordinateur, une station de travail, un appareil connecté à l'Internet ou tout autre dispositif de communication dédié ou à usage général. Des programmes logiciels exécutés par cet appareil remplissent des fonctions de gestion du réseau pour contrôler des éléments de réseau.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes. Plusieurs moyens ou modules peuvent être représentés par un même élément matériel.

Dans les revendications, tout signe de référence entre parenthèses ne saurait être interprété comme une limitation de la revendication.

## Revendications

1. Procédé pour établir une connexion de récupération dans un réseau optique, comprenant les étapes consistant à :
allouer des ressources de transport optique à ladite connexion de récupération le long d'un chemin de connexion,
pendant une phase de test de ladite connexion de récupération (60), transmettre un signal optique (61) au moyen desdites ressources de transport optique le long du chemin de connexion et régler un dispositif de modification de puissance du signal optique (20, 31),
mémoriser (62) un état de réglage dudit dispositif de modification de puissance obtenu pendant ladite phase de test de la connexion de récupération,
interrompre la transmission dudit signal optique à la fin de la phase de test,
dans une phase d'activation de la connexion de récupération (80), réinitialiser (82) le réglage du dispositif de modification de puissance du signal optique dans l'état de réglage mémorisé et recommencer à transmettre un signal optique (81) au moyen desdites ressources de transport optique le long du chemin de connexion.

2. Procédé selon la revendication 1, comprenant l'étape consistant à :
notifier à au moins un noeud de commutation situé sur ledit chemin de connexion au moins un événement appartenant au groupe consistant en le début de la phase de test, la fin de la phase de test et le début de la phase d'activation au moyen de messages de gestion transmis par un appareil de gestion de réseau centralisé (100).

3. Procédé selon la revendication 1 ou 2, comprenant l'étape consistant à :
notifier à au moins un noeud de commutation situé sur ledit chemin de connexion au moins un événement appartenant au groupe consistant en le début de la phase de test, la fin de la phase de test et le début de la phase d'activation au moyen de messages de signalisation (51, 65, 85) échangés par les noeuds de commutation situés sur le chemin de connexion.

4. Procédé selon l'une des revendications 1 à 3, comprenant une phase de latence (70) de la connexion de récupération entre la phase de test (60) et la phase d'activation (80), pendant laquelle les ressources de transport optique allouées à ladite connexion de récupération sont associées à un état d'allocation partagé qui autorise l'utilisation desdites ressources par d'autres connexions.

5. Procédé selon l'une des revendications 1 à 4, dans lequel l'étape consistant à régler le dispositif de modification de puissance du signal optique est effectuée en fonction d'un profil de puissance souhaité prédéterminé et d'un signal de rétroaction (22) sensible à la puissance du signal optique effectivement transmis en aval du dispositif de modification de puissance.

6. Procédé selon la revendication 5, dans lequel le signal optique est transporté en multiplexage par division de longueur d'onde, ledit profil de puissance souhaité prédéterminé comportant une relation entre les puissances respectives de différents canaux de longueur d'onde multiplexés.

7. Procédé selon l'une des revendications 1 à 6, dans lequel le dispositif de modification de puissance du signal optique appartient au groupe consistant en les atténuateurs optiques variables, les amplificateurs optiques, les commutateurs à sélection de longueur d'onde (20, 31), les bloqueurs de longueur d'onde et les égaliseurs de spectre.

8. Procédé selon l'une des revendications 1 à 7, dans lequel la connexion de récupération est établie dans le domaine photonique.

9. Elément de réseau optique (1) comportant
des ressources de transport optique allouées à une connexion de récupération pour pouvoir transporter un signal optique (61) de ladite connexion de récupération,
un dispositif de modification de puissance (20, 31) pour modifier la puissance dudit signal optique, et
des moyens de commande (11) aptes à régler ledit dispositif de modification de puissance du signal optique, à mémoriser dans un dispositif de stockage de données un état de réglage dudit dispositif de modification de puissance obtenu pendant une phase de test de ladite connexion de récupération, et à réinitialiser le réglage du dispositif de modification de puissance dans l'état de réglage mémorisé dans une phase d'activation de la connexion de récupération.

10. Elément de réseau optique selon la revendication 9, comportant un module de communication (15) pour recevoir des messages de gestion transmis par un appareil de gestion de réseau centralisé (100), de manière à recevoir notification d'au moins un événement appartenant au groupe consistant en le début de la phase de test, la fin de la phase de test et le début de la phase d'activation au moyen desdits messages de gestion.

11. Elément de réseau optique selon la revendication 9 ou 10, comportant un module de signalisation (15) pour échanger des messages de signalisation avec des éléments de réseau (A, C, D) situés sur un chemin de ladite connexion de récupération, de manière à recevoir notification d'au moins un événement appartenant au groupe consistant en le début de la phase de test, la fin de la phase de test et le début de la phase d'activation au moyen desdits messages de signalisation.

12. Elément de réseau optique selon l'une des revendications 9 à 11, dans lequel lesdits moyens de commande sont aptes à enregistrer des états d'allocation des ressources de transport optique de l'élément de réseau, lesdits états d'allocation définissant des conditions dans lesquelles lesdites ressources peuvent être utilisées par des connexions, lesdits moyens de commande étant aptes à changer l'état d'allocation des ressources de transport optique allouées à ladite connexion de récupération au début de la phase d'activation, de manière à autoriser une utilisation desdites ressources par d'autres connexions avant la phase d'activation et à interdire une telle utilisation pendant la phase d'activation.

13. Elément de réseau optique selon l'une des revendications 9 à 12, comportant un dispositif de mesure (24) sensible à la puissance du signal optique effectivement transmis en aval du dispositif de modification de puissance et dans lequel lesdits moyens de commande sont aptes à régler le dispositif de modification de puissance du signal optique en fonction d'un profil de puissance souhaité prédéterminé et d'un signal de rétroaction (22) produit par ledit dispositif de mesure.

14. Elément de réseau optique selon la revendication 13, dans lequel le signal optique est transporté en multiplexage par division de longueur d'onde, ledit profil de puissance souhaité prédéterminé comportant une relation entre les puissances respectives de différents canaux de longueur d'onde multiplexés.

15. Elément de réseau optique selon l'une des revendications 9 à 14, dans lequel le dispositif de modification de puissance du signal optique appartient au groupe consistant en les atténuateurs optiques variables, les amplificateurs optiques, les commutateurs à sélection de longueur d'onde (20, 31) et les bloqueurs de longueur d'onde.

16. Elément de réseau optique selon l'une des revendications 9 à 14, dans lequel le dispositif de modification de puissance du signal optique est intégré dans une source optique ou un récepteur optique.

## Patentansprüche

1. Verfahren zum Aufbau einer Wiederherstellungsverbindung in einem optischen Netzwerk, die folgenden Schritte umfassend:
das Zuteilen von optischen Transportressourcen für besagte Wiederherstellungsverbindung entlang eines Verbindungswegs,
im Verlauf einer Testphase für besagte Wiederherstellungsverbindung (60) das Übermitteln eines optischen Signals (61) mittels besagter Transportressourcen entlang des Verbindungswegs und das Einstellen einer Modifizierungsvorrichtung für die Leistung des optischen Signals (20, 31),
das Speichern (62) des Zustands der Einstellung besagter Leistungsmodifizierungsvorrichtung, die im Verlauf besagter Testphase für die Wiederherstellungsverbindung ermittelt wurde,
das Unterbrechen der Übermittlung besagten optischen Signals am Ende der Testphase, im Verlauf einer Aktivierungsphase für die Wiederherstellungsverbindung (80) das Zurücksetzen (82) der Einstellung der Leistungsmodifizierungsvorrichtung des optischen Signals auf den gespeicherten Einstellungszustand und das neuerliche Übermitteln eines optischen Signals (81) mittels besagter optischer Transportressourcen entlang des Verbindungswegs.

2. Verfahren nach Anspruch 1, den folgenden Schritt umfassend:
das Mitteilen an mindestens einen auf besagtem Verbindungsweg situierten Kommunikationsknoten mindestens eines der Ereignisse aus der Gruppe, die gebildet wird vom Beginn der Testphase, dem Ende der Testphase und dem Beginn der Aktivierungsphase, was anhand einer Verwaltungsnachricht erfolgt, die von einer zentralen Netzverwaitungsvorrichtung (100) gesendet wird.

3. Verfahren nach Anspruch 1 oder 2, den folgenden Schritt umfassend:
das Mitteilen an mindestens einen auf besagtem Verbindungsweg situierten Kommunikationsknoten mindestens eines der Ereignisse aus der Gruppe, die gebildet wird vom Beginn der Testphase, dem Ende der Testphase und dem Beginn der Aktivierungsphase, was anhand von Signalisierungsnachrichten (51, 65, 85) erfolgt, die von den auf dem Verbindungsweg situierten Kommunikationsknoten ausgetauscht werden.

4. Verfahren nach einem jeglichen der Ansprüche 1 bis 3, eine Latenzphase (70) der Wiederherstellungsverbindung zwischen der Testphase (60) und der Aktivierungsphase (80) umfassend, im Verlauf derer die der besagten Wiederherstellungsverbindung zugewiesenen, optischen Transportressourcen assoziiert sind mit einem geteilten Zuweisungszustand, welcher die Benutzung besagter Ressourcen für andere Verbindungen autorisiert.

5. Verfahren nach einem jeglichen der Ansprüche 1 bis 4, wobei der Schritt des Regulierens der Leistungsmodifizierungsvorrichtung des optischen Signals in Funktion eines vordefinierten, erwünschten Leistungsprofils und eines Rückkopplungssignals (22) erfolgt, welches sensitiv für die tatsächlich übertragene, der Leistungsmodifizierungsvorrichtung nachgelagerte Leistung des optischen Signals ist.

6. Verfahren nach Anspruch 5, wobei das optische Signal im Wellenlängenmultiplexverfahren übermittelt wird, wobei das besagte, vordefinierte erwünschte Leistungsprofil ein Verhältnis zwischen der jeweiligen Leistung der verschiedenen Wellenlängenmultiplexkanäle umfasst.

7. Verfahren nach einem jeglichen der Ansprüche 1 bis 6, wobei die Leistungsmodifizierungsvorrichtung des optischen Signals zu der Gruppe gehört, die von den optischen variablen Abschwächern, den optischen Verstärkern, den Wellenlängenauswahlschaltern (20, 31), den Wellenlängenblockierern und den Spektralentzerrern gebildet wird.

8. Verfahren nach einem jeglichen der Ansprüche 1 bis 7, wobei die Wiederherstellungsverbindung im photonischen Bereich erfolgt.

9. Element eines optischen Netzwerks (1), umfassend:
einer Wiederherstellungsverbindung zugewiesene, optische Transportressourcen für den Transport eines optischen Signals (61) besagter Wiederherstellungsverbindung, eine Leistungsmodifizierungsvorrichtung (20, 31) zum Modifizieren der Leistung besagten optischen Signals und
Steuerungsmittel (11), ausgelegt für das Einstellen besagter Leistungsmodifizierungsvorrichtung für das optische Signal, für das Speichern von im Verlauf der Testphase besagter Wiederherstellungsverbindung gewonnener Zustandsdaten zur Einstellung besagter Leistungsmodifizierungsvorrichtung in einer Speichervorrichtung und für das Zurücksetzen der Einstellung der Leistungsmodifizierungsvorrichtung auf den Einstellungszustand, der in einer Aktivierungsphase für die Wiederherstellungsverbindung gespeichert wurde.

10. Element eines optischen Netzwerks nach Anspruch 9, ein Kommunikationsmodul (15) für den Empfang von Verwaltungsnachrichten umfassend, die von einer zentralen Netzverwaltungsvorrichtung (100) gesendet werden, dergestalt, dass anhand besagter Verwaltungsnachrichten eine Benachrichtigung hinsichtlich mindestens eines Ereignisses aus der Gruppe empfangen wird, welche gebildet wird vom Beginn der Testphase, dem Ende der Testphase und dem Beginn der Aktivierungsphase.

11. Element eines optischen Netzwerks nach Anspruch 9, ein Kommunikationsmodul (15) für den Empfang von Verwaltungsnachrichten umfassend, die von einer zentralen Netzverwaltungsvorrichtung (100) gesendet werden, dergestalt, dass anhand besagter Verwaltungsnachrichten eine Benachrichtigung hinsichtlich mindestens eines Ereignisses aus der Gruppe empfangen wird, welche gebildet wird vom Beginn der Testphase, dem Ende der Testphase und dem Beginn der Aktivierungsphase.

12. Element eines optischen Netzwerks nach einem jeglichen der Ansprüche 9 bis 11, wobei besagte Steuerungsmittel ausgelegt sind für das Speichern von Zuweisungszuständen optischer Transportressourcen des Netzwerkelements, wobei besagte Zuweisungszustände die Bedingungen für die Benutzung besagter Ressourcen für Verbindungen definieren, wobei besagte Steuerungsmittel dafür ausgelegt sind, um den Zuweisungszustand optischer Transportressourcen zu ändern, die besagter Wiederherstellungsverbindung zu Beginn der Aktivierungsphase zugewiesen sind, um so vor der Aktivierungsphase eine Benutzung besagter Ressourcen durch andere Verbindungen zu autorisieren und besagte Benutzung während der Aktivierungsphase zu unterbinden.

13. Element eines optischen Netzwerks nach einem jeglichen der Ansprüche 9 bis 12, eine Messvorrichtung (24) umfassend, welche sensitiv für die tatsächlich übertragene, der Leistungsmodifizierungsvorrichtung nachgelagerte Leistung des optischen Signals ist, uns wobei besagte Steuerungsmittel ausgelegt sind für das Einstellen der Leistungsmodifizierungsvorrichtung des optischen Signals in Funktion eines vordefinierten, erwünschten Leistungsprofils und eines Rückkopplungssignals (22), welches von besagter Messvorrichtung erzeugt wird.

14. Element eines optischen Netzwerks nach Anspruch 13, wobei das optische Signal im Wellenlängenmultiplexverfahren übermittelt wird, wobei das besagte, vordefinierte erwünschte Leistungsprofil ein Verhältnis zwischen der jeweiligen Leistung der verschiedenen Wellenlängenmultiplexkanäle umfasst.

15. Element eines optischen Netzwerks nach einem jeglichen der Ansprüche 9 bis 14, wobei die Leistungsmodifizierungsvorrichtung des optischen Signals zu der Gruppe gehört, die von den optischen variablen Abschwächern, den optischen Verstärkern, den Wellenlängenauswahlschaltern (20, 31) und den Wellenlängenblockierern gebildet wird.

16. Element eines optischen Netzwerks nach einem jeglichen der Ansprüche 9 bis 14, wobei die Leistungsmodifizierungsvorrichtung des optischen Signals in eine optische Quelle oder einen optischen Empfänger integriert ist.

## Claims

1. A method for establishing a recovery connection in an optical network, comprising the steps consisting of:
allocating optical transport resources to said recovery connection along a connection path,
during a test phase of said recovery connection (60), transmitting an optical signal (61) by means of said optical transport resources along the connection path and adjust a device for modifying the power of the optical signal (20, 31),
saving (62) an adjustment state of said power modification device obtained during said test phase of the recovery connection,
interrupting the transmission of said optical signal at the end of the test phase,
in an activation phase of the recovery connection (80), resetting (82) the adjustment of the device for modifying the power of the optical signal to the saved adjustment state and transmitting again an optical signal (81) by means of said optical transport resources along the connection path.

2. A method according to claim 1, comprising the step consisting of:
notifying at least one communication node located on said connection path of at least one event belonging to the group consisting of the start of the test phase, the end of the test phase, and the start of the activation phase by means of management messages transmitted by a centralized network management apparatus (100).

3. A method according to claim 1 or 2, comprising the step consisting of:
notifying at least one communication node located on said connection path of at least one event belonging to the group consisting of the start of the test phase, the end of the test phase, and the start of the activation phase by means of signaling messages (51, 65, 85) exchanged by the switching nodes located on the connection path.

4. A method according to one of the claims 1 to 3, comprising a latency phase (70) of the recovery connection between the test phase (60) and the activation phase (80), during which the optical transport resources allocated to said recovery connection are associated with a shared allocation state that allows the use of said resources by other connections.

5. A method according to one of the claims 1 to 4, wherein the step consisting of adjusting the device for modifying the power of the optical signal is performed based on a predetermined desired power profile and a feedback signal (22) sensitive to the power of the optical signal actually transmitted downstream of the power modification device.

6. A method according to claim 5, wherein the optical signal is transported using wavelength division multiplexing, said predetermined desired power profile comprising a relationship between the respective powers of different multiplexed wavelength channels.

7. A method according to one of the claims 1 to 6, wherein the device for modifying the power of the optical signal belongs to the group consisting of variable optical attenuators, optical amplifiers, wavelength selection switches (20, 31), wavelength blockers, and spectrum equalizers.

8. A method according to one of the claims 1 to 7, wherein the recovery connection is established in the photonic domain.

9. An optical network element (1) comprising
optical transport resources allocated to a recovery connection to be able to transport an optical signal (61) of said recovery connection,
a power modification device (20, 31) for modifying the power of said optical signal, and control means (11) able to adjust said device for modifying the power of the optical signal, able to save in a data storage device an adjustment state of said power modification device obtained during a test phase of said recovery connection, and reset the adjustment of the power modification device in the adjustment state saved in an activation phase of the recovery connection.

10. An optical network element according to claim 8, comprising a communication module (15) for receiving management messages transmitted by a centralized network management apparatus (100), so as to receive notification of at least one event belonging to the group consisting of the start of the test phase, the end of the test phase, and the start of the activation phase by means of said management messages.

11. An optical network element according to claim 9 or 10, comprising a signaling module (15) for exchanging signaling messages with network elements (A, C, D) located on a path of said recovery connection, so as to receive notification of at least one event belonging to the group consisting of the start of the test phase, the end of the test phase, and the start of the activation phase by means of said management messages.

12. An optical network element according to one of the claims 9 to 11, wherein said control means are able to save allocation states of the optical transport resources of the network element, said allocation states defining conditions under which said resources can be used by connections, said control means being able to change the allocation state of the optical transport resources allocated to said recovery connection at the start of the activation phase, so as to authorize a use of said resources by other connections before the activation phase and to prohibit such usage during the activation phase.

13. An optical network element according to one of the claims 9 to 12, comprising a measurement device (24) sensitive to the power of the optical signal actually transmitted downstream of the power modification device and in which said control means are able to adjust the power modification device of the optical signal based on a predetermined desired power profile and on a feedback signal (22) produced by said measurement device.

14. An optical network element according to claim 13, wherein the optical signal is transported by wavelength division multiplexing, said predetermined desired power profile comprising a relationship between the respective powers of different multiplexed wavelength channels.

15. An optical network element according to one of the claims 9 to 14, wherein the device for modifying the power of the optical signal belongs to the group consisting of variable optical attenuators, optical amplifiers, wavelength selection switches (20, 31), wavelength blockers, and spectrum equalizers.

16. An optical network element according to one of the claims 9 to 14, wherein the device for modifying the power of the optical signal is incorporated into an optical source or an optical receiver.
